(19) Europäisches Patentamt
European Patent Office
Office européen des brevets

(11) EP 2 227 950 A1

(12) # EUROPÄISCHE PATENTANMELDUNG

(43) Veröffentlichungstag:
**15.09.2010 Patentblatt 2010/37**

(51) Int Cl.:
***A01N 25/32*** *(2006.01)* ***A01N 47/36*** *(2006.01)*
***A01N 43/56*** *(2006.01)* ***A01P 13/02*** *(2006.01)*

(21) Anmeldenummer: **10156191.8**

(22) Anmeldetag: **16.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.11.2006 DE 102006056083**

(62) Dokumentnummer(n) der früheren Anmeldung(en) nach Art. 76 EPÜ:
**07846629.9 / 2 096 913**

(71) Anmelder: **Bayer CropScience AG**
**40789 Monheim (DE)**

(72) Erfinder:
- **Duncan, Nick**
  **Sudbury CO10 7EL (GB)**
- **Eadie, Al**
  **40489 Düsseldorf (DE)**

Bemerkungen:
Diese Anmeldung ist am 11-03-2010 als Teilanmeldung zu der unter INID-Code 62 erwähnten Anmeldung eingereicht worden.

(54) **Synergistisch wirkende und kulturpflanzenverträgliche herbizide Mittel enthaltend Herbizide aus der Gruppe der Benzoylpyrazole**

(57) Es werden herbizide Mittel enthaltend
A) pyrasulfotole,
B) iodosulfuron-methyl-sodium und/oder mesosulfuron-methyl
C) gegebenenfalls mindestens einen Safener
als gegen monokotyle und/oder dikotyle Schadpflanzen wirksame Herbizide beschrieben.
Diese Mittel weisen eine gegenüber den einzeln angewandten Herbiziden überlegene Wirkung bei gleichzeitiger hoher Verträglichkeit gegenüber Kulturpflanzen auf.

EP 2 227 950 A1

## Beschreibung

Synergistisch wirkende und kulturpflanzenverträgliche herbizide Mittel enthaltend Herbizide aus der Gruppe der Benzoylpyrazole

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden und gegebenenfalls einem Safener enthalten.

Spezieller betrifft sie herbizide Mittel, welche als Wirkstoff das Herbizid pyrasulfotole in Kombination mit mindestens einem weiteren Herbizid und gegebenenfalls einem Safener enthalten.

Aus WO 03/043422 ist bekannt, daß herbizide Mittel enthaltend pyrasulfotole in Kombination mit bestimmten Herbiziden synergistische Eigenschaften aufweisen. Aus WO 03/043423 ist bekannt, daß herbizide Mittel enthaltend pyrasulfotole und bestimmte Safener kulturpflanzenverträgliche Eigenschaften aufweisen. Aus WO 2006/103002 ist bekannt, daß herbizide Mittel enthaltend pyrasulfotole, bestimmte Herbizide und bestimmte Safener synergistische kulturpflanzenverträgliche Eigenschaften aufweisen.

Die in diesen Schriften offenbarten herbizide Mittel erfüllen jedoch in der Praxis, d.h. insbesondere in der Bekämpfung von unerwünschten Pflanzen im Getreideanbau nicht immer alle an moderne herbizide Mittel gestellte Anforderungen. So ist je nach Standort oftmals das Spektrum der bekämpfbaren unerwünschten Pflanzen nicht immer hinreichend, oder die Safener-Wirkung ist in dem herbiziden Mittel nicht ausreichend.

Aufgabe der vorliegenden Erfindung ist die Bereitstellung von herbiziden Mitteln mit gegenüber dem Stand der Technik verbesserten Eigenschaften.

Ein Gegenstand der Erfindung sind ausgewählte herbizide Mittel, gekennzeichnet durch einen wirksamen Gehalt an

A) dem Herbizid pyrasulfotole der Formel (A) sowie dessen landwirtschaftlich üblichen Salze (Komponente (A),

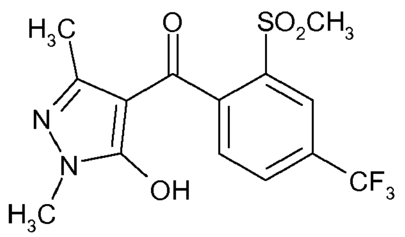

(A)

B) mindestens einem Herbizid (Komponente (B)) aus der Gruppe umfassend aminopyralid iodosulfuron-methyl-sodium und mesosulfuron-methyl, und

C) einer antidotisch wirksamen Menge an mindestens einem Safener (Komponente C)) aus der Gruppe umfassend mefenpyr-diethyl, cloquintocet-mexyl und isoxadifen-ethyl,

wobei diese Mittel die Komponenten (A), (B) und (C) in einem Gewichtsverhältnis von x:y:z enthalten, worin x, y und z jeweils unabhängig voneinander Werte von 1 bis 200, vorzugsweise 1 bis 100, besonders bevorzugt 1 bis 50, annehmen können.

Im Folgenden sind die Begriffe "Komponente (A)" und "Herbizid (A)" als gleichbedeutend zu verstehen. Analoges gilt für die Begriffe "Komponente (B)" und "Herbizid (B)" sowie "Komponente (C)" und "Safener (C)".

Das Herbizid pyrasulfotole ist beispielsweise aus WO 01/74785 und von der Website "http://www.alanwood.net/pesticides/index.html" bekannt. Die chemischen Strukturen der anderen oben mit ihren "common names" genannten Wirkstoffe sind beispielsweise aus "The Pesticide Manual" 14. Auflage, 2006, British Crop Protection Council, und von der Website "http://www.alanwood.net/pesticides/index.html" bekannt. Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung.

Die erfindungsgemäßen herbiziden Mittel weisen in bevorzugter Ausführungsform synergistische Wirkungen bei gleichzeitiger hoher Verträglichkeit gegenüber Kulturplanzen auf. Die synergistischen Wirkungen und die hohe Verträglichkeit gegenüber Kulturplanzen können z.B. bei gemeinsamer Ausbringung der Komponenten (A), (B) und (C) beobachtet werden, sie können jedoch häufig auch bei zeitlich versetzter Anwendung (Splitting) festgestellt werden. Möglich ist auch die Anwendung der einzelnen Herbizide und Safener oder der Herbizid-Safener-Kombinationen in mehreren Portionen (Sequenzanwendung), z. B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Erfindungsgemäß umfasst sind auch solche herbiziden Mittel, die neben den Komponenten (A), (B) und (C) noch ein oder mehrere weitere agrochemische Wirkstoffe anderer Struktur enthalten, wie Herbizide, Insektizide, Fungizide oder Safener. Für solche herbiziden Mittel gelten die vor- und nachstehend erläuterten bevorzugten Bedingungen ebenfalls.

Ebenso erfindungsgemäß umfasst sind auch solche herbiziden Mittel, die neben den Komponenten (A), (B) und (C) noch Düngenmittel, wie Ammoniumsulfat, Ammoniumnitrat, Harnstoff, Kaliumnitrat und Mischungen davon, enthalten.

Für solche herbiziden Mittel gelten die vor- und nachstehend erläuterten bevorzugten Bedingungen ebenfalls.

Weiterhin erfindungsgemäß umfasst sind auch solche herbiziden Mittel, die neben den Komponenten (A), (B) und (C) noch Adjuvantien, wie Emulgatoren, Dispergatoren, mineralische und pflanzliche Öle und Mischungen davon, enthalten. Für solche herbiziden Mittel gelten die vor- und nachstehend erläuterten bevorzugten Bedingungen ebenfalls.

Von besonderem Interesse sind herbizide Mittel mit einem Gehalt an einer oder mehreren der folgenden Kombinationen von drei Verbindungen (A + B + C):

pyrasulfotole + iodosulfuron-methyl-sodium + mefenpyr-diethyl,
pyrasulfotole + iodosulfuron-methyl-sodium + cloquintocet-mexyl,
pyrasulfotole + iodosulfuron-methyl-sodium + isoxadifen-ethyl,
pyrasulfotole + mesosulfuron-methyl + mefenpyr-diethyl,
pyrasulfotole + mesosulfuron-methyl + cloquintocet-mexyl,
pyrasulfotole + mesosulfuron-methyl + isoxadifen-ethyl.

In einer weiteren bevorzugten Ausführungsform enthalten die erfindungsgemäßen herbiziden Mittel das Herbizid (A), zwei verschiedene Komponenten (B) und einen Safener (C):

pyrasulfotole + iodosulfuron-methyl-sodium + mesosulfuron-methyl + mefenpyr-diethyl,
pyrasulfotole + iodosulfuron-methyl-sodium + mesosulfuron-methyl + cloquintocet-mexyl,
pyrasulfotole + iodosulfuron-methyl-sodium + mesosulfuron-methyl + isoxadifen-ethyl.

In den erfindungsgemäßen herbiziden Mitteln benötigt man in der Regel Aufwandmengen im Bereich von 1 bis 2000 g, vorzugsweise 10 bis 1000 g, besonders bevorzugt 10 bis 300 g Aktivsubstanz pro Hektar ai/ha) der Komponente (A) und 1 bis 2000 g, vorzugsweise 1 bis 1000 g, besonders bevorzugt 5 bis 500 g, der Komponente (B) sowie 1 bis 1000 g, vorzugsweise 1 bis 500 g, besonders bevorzugt 5 bis 250 g der Komponente (C).

Die Gewichtsverhältnisse der Komponenten (A) zu (B) einerseits und (A+B) zu (C) andererseits können in weiten Bereichen variiert werden. Vorzugsweise ist das Mengenverhältnis der Komponenten (A) zu (B) im Bereich von 1:100 bis 100:1, besonders bevorzugt im Bereich von 1:50 bis 50:1, insbesondere im Bereich von 1:20 bis 20:1. Vorzugsweise ist das Mengenverhältnis der Komponenten (A+B) zu (C) im Bereich von 1:10 bis 50:1, insbesondere im Bereich von 1:5 bis 20:1. Die vorstehend genannten Bereiche gelten auch für den Fall, daß die erfindungsgemäßen herbiziden Mittel mehr als eine Komponente (B) und/oder Komponente (C) enthalten. Die genannten Zahlenwerte gelten dann für die summierten Einzelwerte der Komponenten (B) beziehungsweise (C).

Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Mittel lassen sich zur selektiven Bekämpfung von annuellen und perennierenden monokotylen und dikotylen Schadpflanzen in Getreide-(beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe (A) und (B) resistent sind, einsetzen. Ebenso sind sie zur Bekämpfung unerwünschter Schadpflanzen einsetzbar in Plantagenkulturen wie Ölpalme, Kokospalme, Gummibaum, Zitrus, Ananas, Baumwolle, Kaffee, Kakao u.a. sowie im Obst- und Weinbau. Besonders geeignet sind sie auf Grund ihrer guten Verträglichkeit für die Anwendung in Getreide und Mais, ganz besonders in Getreide.

Die erfindungsgemäßen Mittel erfassen ein breites Unkrautspektrum. Sie eignen sich zur Bekämpfung von annuellen und perennierenden Schadpflanzen wie z.B. aus den Spezies Abuthylon, Alopecurus, Avena, Chenopodium, Cynoden, Cyperus, Digitaria, Echinochloa, Elymus, Galium, Ipomoea, Kochia, Lamium, Matricaria, Polygonum, Scirpus, Setaria, Sorghum, Veronica, Viola und Xanthium.

Ein weiterer Vorteil der erfindungsgemäßen Mittel besteht auch in ihrer ausgezeichneten Wirkung gegen viele mittlerweile gegen Sulfonylharnstoffe resistent gewordene Schadpflanzen, wie beispielsweise Kochia.

Gegenstand der Erfindung ist auch ein Verfahren zur Bekämpfung von unerwünschtem Pflanzenwuchs, **dadurch gekennzeichnet, daß** man das Herbizid (A) mit einem oder mehreren Herbiziden (B) und einem oder mehreren Safener (C) auf die Schadpflanzen, Pflanzenteile davon oder die Anbaufläche appliziert.

Die erfindungsgemäßen herbiziden Mittel zeichnen sich auch dadurch aus, daß die in den Kombinationen verwendeten und wirksamen Dosierungen der Komponenten (A) und (B) gegenüber einer Einzeldosierung verringert ist, so daß eine Reduzierung der nötigen Aufwandmengen der Wirkstoffe ermöglicht wird (synergistischer Effekt). Gleichzeitig wird die Verträglichkeit gegenüber Kulturpflanzen durch die Anwesenheit des Safeners (C) stärker erhöht, als bei einer Kombination des Safeners (C) mit dem Herbizid (A) oder einem Herbizid (B). Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen herbiziden Mittel können sowohl als Mischformulierungen der Herbizide (A) und (B) sowie des Safeners (C), gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die erfindungsgemäßen herbiziden Mittel können auf verschiedene Arten formuliert werden, je nachdem welche biologischen und/oder chemisch-physikalischen Parameter vorgegeben sind. Als allgemeine Formulierungsmöglichkeiten kommen z.B. in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Ölsuspensionskonzentrat (SC), Dispersionen auf Öl- oder Wasserbasis, Suspoemulsionen, Stäubemittel (DP), Beizmittel, Granulate zur Boden- oder Streuapplikation oder wasserdispergierbare Granulate (WG), wasserdispergierbares Granulat (WDG), wasseremulgierbares Granulat (WEG), ULV-Formulierungen, Mikrokapseln oder Wachse.

Die einzelnen Formulierungstypen sind im Prinzip bekannt und werden z.B. beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Komponenten (A), (B) und (C), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen herbiziden Mittel hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° (C) mischt und in einer Reibkugelmühle auf eine Feinheit von unter 5 Mikron vermahlt.

d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator. e) Ein in Wasser dispergierbares Granulat wird erhalten indem man

75 Gew.-Teile eines WirkstoffsM/irksstoffgemischs,
10 Gew.-Teile ligninsulfonsaures Calcium,
5 Gew.-Teile Natriumlaurylsulfat, 3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Herbizide Wirkung im Nachauflauf

Samen von mono- bzw. dikotylen Unkraut- bzw. Kulturpflanzen werden in Holzfasertöpfen oder in Plastiktöpfen in sandigem Lehmboden ausgelegt, mit Erde abgedeckt und im Gewächshaus, während der Vegetationsperiode auch im Freien außerhalb des Gewächshauses, unter guten Wachstumsbedingungen angezogen. 2-3 Wochen nach der Aussaat werden die Versuchspflanzen im Ein- bis Drei-Blattstadium behandelt. Die als Spritzpulver (WP) oder Flüssigkeit (EC) formulierten Testverbindungen werden in verschiedenen Dosierungen mit einer Wasseraufwandmenge von umgerechnet 300 l/ha unter Zusatz von Netzmittel (0,2 bis 0,3 %) auf die Pflanzen und die Bodenoberfläche gespritzt. 3 bis 4 Wochen nach Behandlung der Versuchspflanzen wird die Wirkung der Präparate visuell im Vergleich zu unbehandelten Kontrollen bonitiert (herbizide Wirkung in Prozent (%): 100 % Wirkung = Pflanzen sind abgestorben, 0 % Wirkung = wie Kontrollpflanzen).

Verwendung von Safenern

Soll zusätzlich getestet werden, ob Safener die Pflanzenverträglichkeit von Testsubstanzen bei den Kulturpflanzen verbessern können, werden folgende Möglichkeiten für die Anwendung des Safeners verwendet:

- Samen der Kulturpflanzen werden vor der Aussaat mit der Safenersubstanz gebeizt (Angabe der Safenermenge in Prozent bezogen auf das Samengewicht)
- Kulturpflanzen werden vor Anwendung der Testsubstanzen mit dem Safener mit einer bestimmten Hektaraufwandmenge gespritzt (üblicherweise 1 Tag vor Anwendung der Prüfsubstanzen)
- der Safener wird zusammen mit der Testsubstanz als Tankmischung appliziert (Angabe der Safenermenge in g/ha oder als Verhältnis zum Herbizid).

Durch Vergleich der Wirkung von Testsubstanzen auf Kulturpflanzen, welche ohne und mit Safener behandelt wurden, kann die Wirkung der Safenersubstanz beurteilt werden.
Dabei wird festgestellt, daß die herbiziden Wirkungen der erfindungsgemäßen Mittel über den Erwartungswerten nach Colby liegen, die sich nach folgender Formel errechnen (vgl. S. R. Colby; in Weeds 15 (1967) S. 20 bis 22):

$$E = A + B - \frac{A \times B}{100}$$

Dabei bedeuten:

A, B = jeweils Wirkung der Komponente A bzw.B in Prozent
E = Erwartungswert in Prozent

Überraschenderweise zeigen die erfindungsgemäßen Mittel enthaltend Komponenten (A), (B) und (C) eine höhere herbizide Wirkung als Mittel enthaltend Komponenten (A) und (B). Ebenso überraschenderweise zeigen die erfindungsgemäßen Mittel enthaltend Komponenten (A), (B) und (C) eine bessere Kulturpflanzenverträglichkeit als Mittel enthaltend Komponenten (A) und (C).

Tabelle 16: Wirkung im Nachauflauf

| Komponente | Dosierung [g a.i./ha] | Wirkung gegen MATIN | Berechnet nach Colby |
|---|---|---|---|
| mesosulfuron-methyl | 7,5 | 50 % | |
| pyrasulfotole | 12,5 | 70 % | |
| mefenpyr-diethyl | 9,4 | 0 % | |
| mesosulfuron-methyl + pyrasulfotole + mefenpyrdiethyl | 7,5 + 12,5 + 9,4 | 100 % | 85 % |

Tabelle 2: Wirkung im Nachauflauf

| Komponente | Dosierung [g a.i./ha] | Schädigung von Sommerweizen |
|---|---|---|
| mesosulfuron-methyl | 7,5 | 15 % |
| pyrasulfotole | 12,5 | 20 % |
| mesosulfuron-methyl + pyrasulfotole + mefenpyrdiethyl | 7,5 + 12,5 + 9,4 | 5 % |

## Patentansprüche

1. Herbizide Mittel, **gekennzeichnet durch** einen wirksamen Gehalt an

    A) dem Herbizid pyrasulfotole der Formel (A) sowie dessen landwirtschaftlich üblichen Salze (Komponente (A)),

    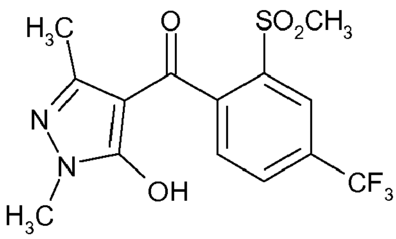

    (A)

    B) mindestens einem Herbizid (Komponente (B)) aus der Gruppe umfassend iodosulfuron-methyl-sodium und mesosulfuron-methyl, und
    C) einer antidotisch wirksamen Menge an mindestens einem Safener (Komponente (C)) aus der Gruppe umfassend mefenpyr-diethyl, cloquintocet-mexyl und isoxadifen-ethyl,

    wobei diese Mittel die Komponenten (A), (B) und (C) in einem Gewichtsverhältnis von x:y:z enthalten, worin x, y und z jeweils unabhängig voneinander Werte von 1 bis 200 vorzugsweise 1 bis 100, annehmen können.

2. Herbizide Mittel nach Anspruch 1, **dadurch gekennzeichnet, daß** sie die Komponenten (A), (B) und (C) in einem Gewichtsverhältnis von x:y:z enthalten, worin x, y und z jeweils unabhängig voneinander Werte von 1 bis 100 annehmen können.

**3.** Herbizide Mittel nach Anspruch 1, **dadurch gekennzeichnet, daß** sie die Komponenten (A), (B) und (C) in einem Gewichtsverhältnis von x:y:z enthalten, worin x, y und z jeweils unabhängig voneinander Werte von 1 bis 50 annehmen können.

**4.** Herbizide Mittel nach einem der Ansprüche 1 bis 3, **dadurch gekennzeichnet, daß** sie zusätzlich im Pflanzenschutz übliche Formulierungsmittel enthalten.

**5.** Herbizide Mittel nach einem der Ansprüche 1 bis 4, **dadurch gekennzeichnet, daß** sie zusätzlich Düngemittel enthalten.

**6.** Herbizide Mittel nach einem der Ansprüche 1 bis 4, **dadurch gekennzeichnet, daß** sie zusätzlich Adjuvantien enthalten.

**7.** Verfahren zur Bekämpfung von unerwünschtem Pflanzenwuchs, **dadurch gekennzeichnet, daß** Komponenten (A), (B) und (C), definiert gemäß Anspruch 1, gemeinsam oder getrennt auf die Pflanzen, Pflanzenteile, Pflanzensamen oder die Fläche, auf der die Pflanzen wachsen, appliziert werden.

**8.** Verfahren nach Anspruch 7 zur selektiven Bekämpfung von Schadpflanzen in Nutzpflanzenkulturen.

**9.** Verfahren nach Anspruch 8 zur Bekämpfung von Schadpflanzen in monokotylen Pflanzenkulturen.

**10.** Verfahren nach Anspruch 9 oder 10, worin die Pflanzenkulturen gentechnisch verändert oder durch Mutationsselektion erhalten sind.

**11.** Verwendung der nach einem der Ansprüche 1 bis 6 definierten herbiziden Mittel zur Bekämpfung von Schadpflanzen.

Europäisches Patentamt
European Patent Office
Office européen des brevets

# EUROPÄISCHER RECHERCHENBERICHT

Nummer der Anmeldung
EP 10 15 6191

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 03/043422 A1 (BAYER CROPSCIENCE GMBH [DE]; HUFF HANS PHILIPP [DE]; SCHMITT MONIKA [D) 30. Mai 2003 (2003-05-30)<br>* Ansprüche; Beispiele *<br>----- | 1-11 | INV.<br>A01N25/32<br>A01N47/36<br>A01N43/56<br>A01P13/02 |
| X,D | WO 03/043423 A1 (BAYER CROPSCIENCE GMBH [DE]; SCHMITT MONIKA [DE]; WILLMS LOTHAR [DE];) 30. Mai 2003 (2003-05-30)<br>* Ansprüche; Beispiele *<br>----- | 1-11 | |
| X | WO 2004/054364 A1 (BAYER CROPSCIENCE GMBH [DE]; DECKWER ROLAND [DE]; HAASE DETLEV [DE]; K) 1. Juli 2004 (2004-07-01)<br>* Seite 94, Absatz 3 *<br>----- | 1-11 | |
| | | | RECHERCHIERTE SACHGEBIETE (IPC)<br>A01N |

Der vorliegende Recherchenbericht wurde für alle Patentansprüche erstellt

2

| Recherchenort | Abschlußdatum der Recherche | Prüfer |
|---|---|---|
| München | 11. Mai 2010 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 15 6191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2010

| Im Recherchenbericht angeführtes Patentdokument | Datum der Veröffentlichung | Mitglied(er) der Patentfamilie | Datum der Veröffentlichung |
|---|---|---|---|
| WO 03043422 A1 | 30-05-2003 | AT 291844 T | 15-04-2005 |
| | | AU 2002356585 A1 | 10-06-2003 |
| | | BR 0214352 A | 26-10-2004 |
| | | CA 2467976 A1 | 30-05-2003 |
| | | CN 1589099 A | 02-03-2005 |
| | | CN 101326914 A | 24-12-2008 |
| | | CN 101485326 A | 22-07-2009 |
| | | DE 10157339 A1 | 12-06-2003 |
| | | EP 1453379 A1 | 08-09-2004 |
| | | ES 2236623 T3 | 16-07-2005 |
| | | HR 20040455 A2 | 30-04-2005 |
| | | HU 0401951 A2 | 28-01-2005 |
| | | JP 4348186 B2 | 21-10-2009 |
| | | JP 2005509656 T | 14-04-2005 |
| | | KR 20050044551 A | 12-05-2005 |
| | | MA 26290 A1 | 01-09-2004 |
| | | MX PA04004863 A | 30-07-2004 |
| | | UA 79442 C2 | 25-06-2007 |
| | | YU 41504 A | 27-10-2006 |
| | | ZA 200403326 A | 20-01-2005 |
| WO 03043423 A1 | 30-05-2003 | AT 336896 T | 15-09-2006 |
| | | AU 2002358502 A1 | 10-06-2003 |
| | | BR 0214378 A | 03-11-2004 |
| | | CA 2467978 A1 | 30-05-2003 |
| | | CN 1589100 A | 02-03-2005 |
| | | DE 10157545 A1 | 12-06-2003 |
| | | EP 1453378 A1 | 08-09-2004 |
| | | ES 2269798 T3 | 01-04-2007 |
| | | HR 20040454 A2 | 30-04-2005 |
| | | HU 0401958 A2 | 28-01-2005 |
| | | JP 4348187 B2 | 21-10-2009 |
| | | JP 2005509657 T | 14-04-2005 |
| | | KR 20050044572 A | 12-05-2005 |
| | | MA 26381 A1 | 01-11-2004 |
| | | MX PA04004864 A | 30-07-2004 |
| | | UA 77038 C2 | 16-08-2004 |
| | | US 2003158039 A1 | 21-08-2003 |
| | | YU 41604 A | 27-10-2006 |
| | | ZA 200403327 A | 03-01-2005 |
| WO 2004054364 A1 | 01-07-2004 | AU 2003303027 A1 | 09-07-2004 |
| | | BR 0317271 A | 08-11-2005 |
| | | CA 2509586 A1 | 01-07-2004 |
| | | EP 1571908 A1 | 14-09-2005 |
| | | HR 20050530 A2 | 31-07-2006 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 10 15 6191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2010

| Im Recherchenbericht angeführtes Patentdokument | Datum der Veröffentlichung | Mitglied(er) der Patentfamilie | Datum der Veröffentlichung |
|---|---|---|---|
| WO 2004054364 A1 | | JP 2006509836 T | 23-03-2006 |
| | | KR 20050085624 A | 29-08-2005 |
| | | MX PA05006211 A | 19-08-2005 |
| | | NZ 540693 A | 27-04-2007 |
| | | US 2005032647 A1 | 10-02-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03043422 A
- WO 03043423 A
- WO 2006103002 A
- WO 0174785 A


### In der Beschreibung aufgeführte Nicht-Patentliteratur


- The Pesticide Manual. British Crop Protection Council, 2006
- **Winnacker-Küchler.** Chemische Technologie. C. Hauser Verlag, 1986, vol. 7
- **van Valkenburg.** Pesticides Formulations. Marcel Dekker, 1973
- **K. Martens.** Spray Drying Handbook. G. Goodwin Ltd, 1979
- **Watkins.** Handbook of Insecticide Dust Diluents and Carriers. Caldwell N.J,
- **H.v. Olphen.** Introduction to Clay Colloid Chemistry. J. Wiley & Sons
- **Marsden.** Solvents Guide. Interscience, 1950
- **McCutcheon's.** Detergents and Emulsifiers Annual. MC Publ. Corp,
- **Sisley ; Wood.** Encyclopedia of Surface Active Egents. Chem. Publ. Co. Inc, 1964
- **Schönfeldt.** Grenzflächenaktive Äthylenoxidaddukte. Wiss. Verlagsgesellschaft, 1976
- **S. R. Colby.** *Weeds,* 1967, vol. 15, 20-22